# EUROPEAN PATENT SPECIFICATION

(11) **EP 2 365 605 B1**
(45) Date of publication and mention of the grant of the patent: **13.09.2017**
(21) Application number: 11155894.6
(22) Date of filing: 24.02.2011
(51) Int. Cl.: H02J 7/04, H01M 10/44, H02J 7/00, H01M 10/0525, H02J 7/08

(54) **Charging apparatus, program**
Ladevorrichtung, Programm
Appareil de charge, programme

(30) Priority: 26.02.2010 JP 2010043074
(43) Date of publication of application: 14.09.2011
(73) Proprietor: Panasonic Intellectual Property Management Co., Ltd., Osaka-shi, Osaka 540-6207 (JP)
(72) Inventor: Kubo, Mamoru, Osaka 570-8677 (JP)
(74) Representative: Glawe, Delfs, Moll

(56) References cited:
- EP-A2- 1 058 367
- EP-A2- 1 821 384
- WO-A1-2008/102528
- JP-A- H11 341 694
- US-A- 6 087 810
- US-A1- 2004 095 095
- US-A1- 2007 001 646
- US-B1- 6 326 769

## Description

### BACKGROUND OF THE INVENTION

### Field of the Invention

The present invention relates to a charging apparatus and a program.

### Description of the Related Art

As a method for charging a lithium-ion battery, known is a method for charging a battery with a constant current until a battery voltage reaches a desired voltage, and thereafter charging with a constant voltage, for example (See Japanese Patent Laid-Open Publication No. 2006-129655, for example).

If the voltage when switching is performed from constant-current charging to constant-voltage charging is deviated from a desired voltage, such a problem might occur that a charge amount of the lithium-ion battery is deviated from a desired value, for example. Thus, the charging apparatus needs to make the voltage when switching is performed from the constant-current charging to the constant-voltage charging equal to the desired voltage with accuracy.

In order to reduce a charging time of the lithium-ion battery, a current value of the constant-current charging, that is, a current value of a charging current needs to be increased. However, in general, if the current value of the charging current is increased, noise level such as ripple contained in the charging current is also raised. Also, since there is internal resistance in the lithium-ion battery, if the noise level of the charging current is raised, the battery voltage is also affected by the noise. Therefore, in this case, it is difficult to cause the charging apparatus to start constant-voltage charging when the voltage becomes the desired battery voltage.

The international patent application WO 2008/102528 A1 discloses a charging system where, below a prescribed threshold voltage, a battery is charged with a constant current and, after the threshold voltage has been reached, is charged with a constant voltage. Document US 6,087,810 A further teaches that the charging current might be reduced after a certain threshold voltage is reached but before a constant voltage charging phase begins. Similarly, the documents EP 1 058 367 A2, JP H11-341694 A, US 2004/095095 A1, US 6,326,769 B1, US 2007/001646 A1 and EP 1 821 384 A2 disclose battery charging systems and methods where the charging current is reduced in a transition phase between a constant current charging phase and a constant voltage charging phase.

It is an object of the invention to provide an improved charging apparatus and program.

### SUMMARY OF THE INVENTION

The solution according to the invention resides in the features of the independent claims and preferably in those of the dependent claims.

Other features of the present invention will become apparent from descriptions of this specification and of the accompanying drawings.

### BRIEF DESCRIPTION OF THE DRAWINGS

For more thorough understanding of the present invention and advantages thereof, the following description should be read in conjunction with the accompanying drawings, in which:
Fig. 1 is a diagram illustrating a configuration of a charging apparatus 10 according to an embodiment of the present invention;
Fig. 2 is a diagram illustrating a functional block realized by a CPU 52;
Fig. 3 is a diagram illustrating an example of a waveform of a charging current Ic generated between voltages V1 and V2;
Fig. 4 is a flowchart illustrating an example of processing executed by the CPU 52;
Fig. 5 is a diagram illustrating an example of a change of a battery voltage Vbat and a charging current Ic when a battery 15 is charged;
Fig. 6 is a diagram illustrating an example of a waveform of a charging current Ic generated between voltages V1 and V2; and
Fig. 7 is a diagram illustrating an example of a change of a battery voltage Vbat and a charging current Ic when a battery 15 is charged.

### DETAILED DESCRIPTION OF THE INVENTION

At least the following details will become apparent from descriptions of this specification and of the accompanying drawings.

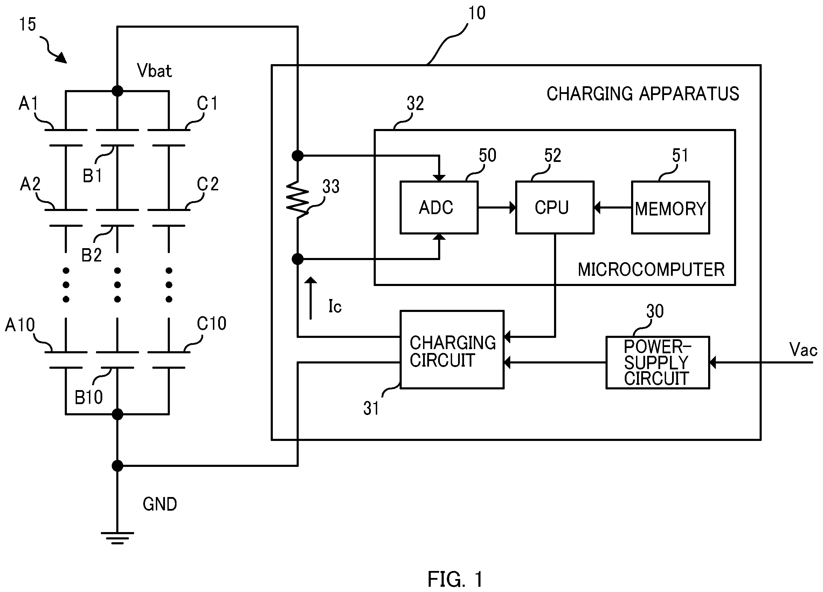

Fig. 1 is a diagram illustrating a configuration of the charging apparatus 10 according to an embodiment of the present invention. The charging apparatus 10 is a device configured to charge a battery 15 when a commercial power supply voltage Vac is inputted. The charging apparatus 10 includes a power-supply circuit 30, a charging circuit 31, a microcomputer 32, and a resistor 33.

The battery 15 (secondary battery) is a so-called battery pack including 30 lithium-ion batteries, for example, and includes lithium-ion batteries A1 to A10, B1 to B10, and C1 to C10. In the battery 15, each group of the serially connected lithium-ion batteries A1 to A10, B1 to B10, and C1 to C10 are connected in parallel. The battery 15 generates a battery voltage Vbat.

The power-supply circuit 30 is an AC-DC converter configured to generate a DC current for operating the charging circuit 31 from the commercial power supply voltage Vac.

The charging circuit 31 charges the battery 15 on the basis of an instruction from the microcomputer 32. Specifically, a voltage and a current in accordance with the instruction from the microcomputer 32 are generated, so as to charge the charging circuit 31.

The microcomputer 32 is a circuit that integrally controls the charging apparatus 10, and includes an AD converter (ADC) 50, a memory 51, and a CPU (Central Processing Unit) 52.

The resistor 33 is a current detecting resistor configured to detect the charging current Ic of the charging circuit 31, and is provided between the charging circuit 31 and a positive electrode of the battery 15.

The AD converter 50 converts the battery voltage Vbat and the voltage generated in the resistor 33 into digital data.

The memory 51 (storage unit) stores program data to be executed by the CPU 52 and various types of data to be used by the CPU 52 when executing the program, for example.

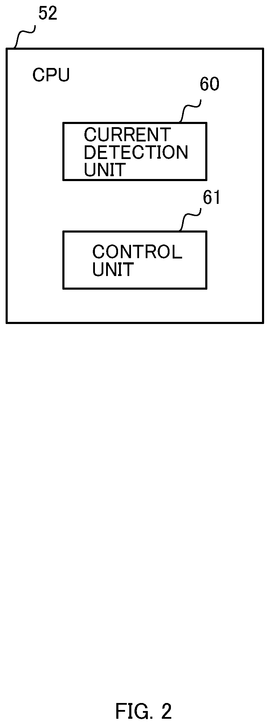

The CPU 52 executes the program data to be stored in the memory 51, so as to realize various functions. Specifically, the CPU 52 realizes functions of a current detection unit 60 and a control unit 61 as shown in Fig. 2.

The current detection unit 60 calculates the charging current Ic on the basis of the voltage of the resistor 33 to be outputted from the AD converter 50.

The control unit 61 controls the charging circuit 31 on the basis of the battery voltage Vbat outputted from the AD converter 50, the charging current Ic obtained by calculating in the current detection unit 60, and the data stored in the memory 51. Also, the control unit 61 controls the charging circuit 31 so that the charging current Ic is decreased when the battery voltage Vbat of the battery 15 gets close to the voltage for constant-voltage charging.

Specifically, until the battery voltage Vbat goes to a predetermined voltage V1 (first voltage), the control unit 61 causes the charging circuit 31 to charge the battery 15 with a constant current IA of a current value I1. Also, when the battery voltage Vbat goes to the voltage V1, the control unit 61 causes the charging circuit 31 to charge the battery 15 with a current IB smaller than the constant current IA. Then, when the battery voltage Vbat is raised to a voltage V2 (second voltage), the control unit 61 causes the charging circuit 31 to charge the battery 15 with the constant voltage VA. That is, if the voltage goes to the voltage V2, constant-voltage charging is started. If the charging current Ic of the battery 15 that is charged with a constant voltage is decreased and goes to a current value 12 (second current value), the control unit 61 causes the charging circuit 31 to stop charging of the battery 15. As a result, supply of the charging current Ic is stopped. That is, the current value 12 is a value of the charging current Ic when charging is finished.

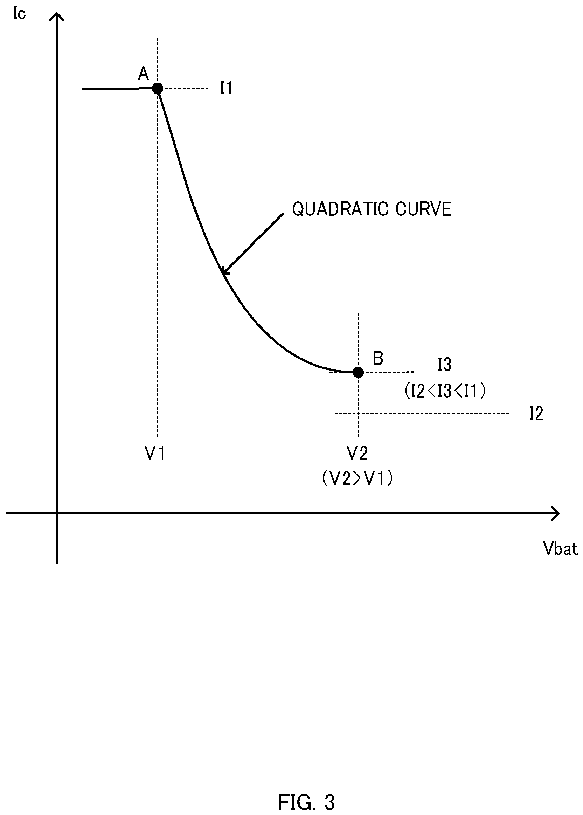

The control unit 61 controls the charging circuit 31 on the basis of the battery voltage Vbat and the data stored in the memory 51 while the battery voltage Vbat is between the voltages V1 to V2. The memory 51 according to the present invention stores data for causing the charging circuit 31 to generate the charging current Ic according to the level of the battery voltage Vbat. Here, the above-described data is, as shown in Fig. 3, for example, data for causing the charging circuit 31 to generate the charging current Ic, which is decreased in a relationship of a quadratic curve projecting downward. The data for generating the charging current Ic, which is decreased in the relationship of the quadratic curve, will be hereinafter referred to as first control data. The quadratic curve includes a point A, which is determined by the voltage V1 and the current value I1 of the constant current IA, and a point B, which is determined by the voltage V2 and a current value 13 of the charging current Ic when the voltage is the voltage V2, and is determined such that the point B is a vertex. The current value 13 (first current value) at the point B is a value smaller than the current value I1 of the constant current IA and greater than the current value I2.

### == Example of operation of charging apparatus 10 ==

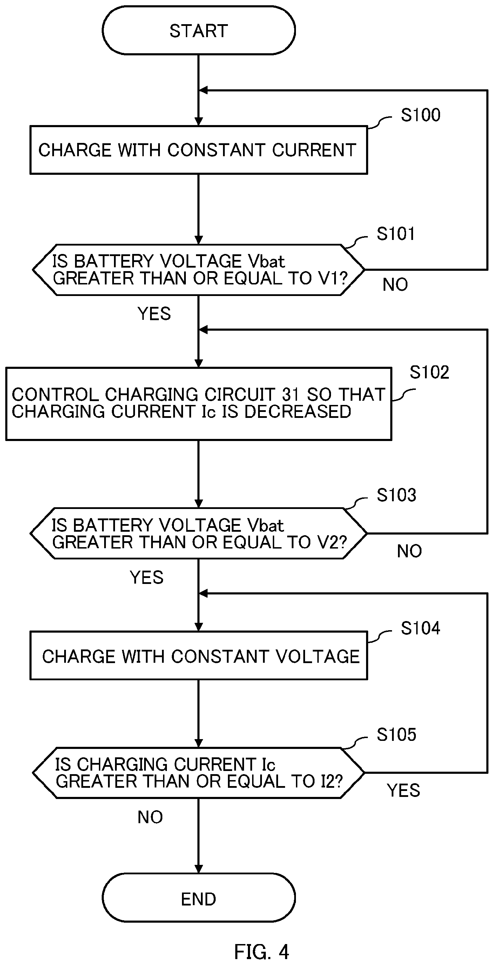

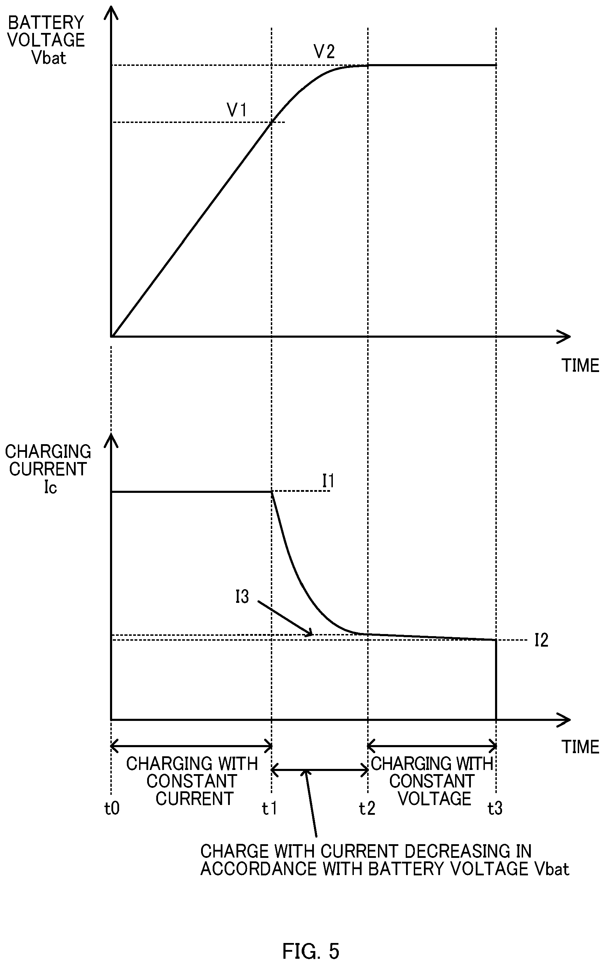

Here, referring to Figs. 4 and 5, an example of an operation of the charging apparatus 10 will be described. Fig. 4 is an example of processing executed by the CPU 52, and Fig. 5 is a diagram illustrating changes in the battery voltage Vbat and the charging current Ic when the charging apparatus 10 charges the battery 15. Also, it is assumed here that the battery 15 has been discharged.

First, at time t0, the control unit 61 causes the charging circuit 31 to charge the battery 15 with the constant current 1A (S100). Thus, at the time t0 and thereafter, the battery voltage Vbat is raised. And the control unit 61 determines whether or not the battery voltage Vbat is greater than or equal to the voltage V1 (S101). If the battery voltage Vbat is smaller than the voltage V1 (S101: NO), processing 100 is executed. On the other hand, for example, if the battery voltage Vbat is raised and goes to the voltage V1 at time t1 (S101: YES), the control unit 61 controls the charging circuit 31 so that the charging current Ic is decreased from the current value I1 (S102). Specifically, the control unit 61 controls the charging circuit 31 so that the charging current Ic is changed in the above-described relationship of the quadratic curve on the basis of the first control data stored in the memory 51 and the battery voltage Vbat. As a result, the charging current Ic is decreased, and the increase of the battery voltage Vbat becomes slow. Also, the control unit 61 determines whether or not the battery voltage Vbat is greater than or equal to the voltage V2 (S103). If the battery voltage Vbat is smaller than the voltage V2 (S103: NO), processing 102 is executed. On the other hand, for example, if the battery voltage Vbat is increased at time t2 and goes to the voltage V2 (S103: YES), the control unit 61 controls the charging circuit 31 such that the battery 15 is charged with the constant voltage VA (S104). As a result, the battery 15 is charged with a constant voltage. Thereafter, the control unit 61 determines whether or not the charging current Ic is greater than or equal to the current value 12 indicating that the charging is finished (S105). If the charging current Ic is smaller than the current value 12 (S105: NO), processing 104 is executed. On the other hand, for example, if the charging current Ic is decreased at time t3 and goes to the current value 12 (S105: YES), the control unit 61 finishes the charging of the battery 15.

### == If control unit 61 controls charging circuit 31 on the basis of another control data ==

Here, a description will be given of a case in which the control unit 61 controls the charging circuit 31 on the basis of another control data different from the first control data.

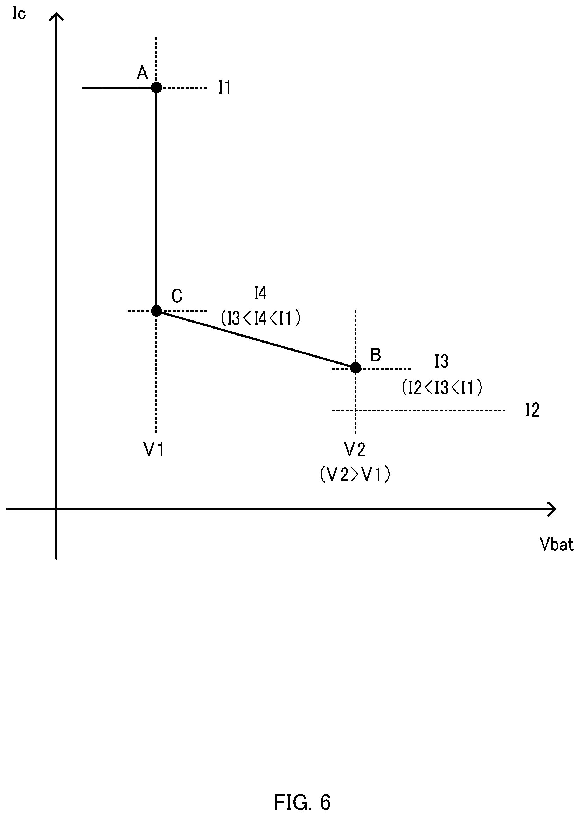

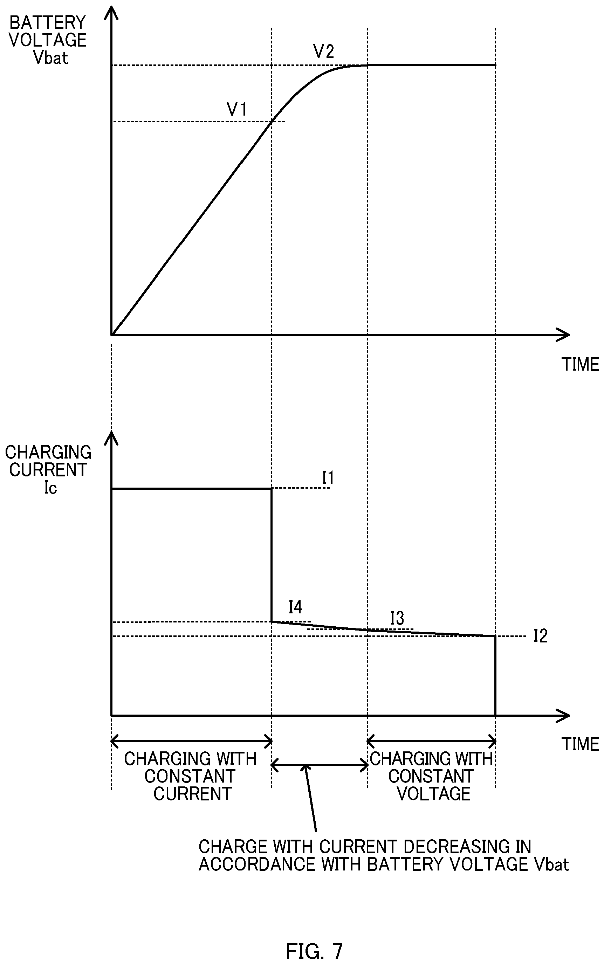

In this case, it is assumed that the memory 51 stores second control data for causing the charging circuit 31 to generate the charging current Ic according to the level of the battery voltage Vbat. Here, the second control data is, as shown in Fig. 6, for example, data for causing the charging circuit 31 to generate the charging current Ic with a current value 14 at the voltage V1, and further causes the charging circuit 31 to generate the charging current Ic, which is decreased linearly in accordance with an increase of the battery voltage Vbat. The current value 14 is a value smaller than the current value I1 of the constant current IA and greater than the current value 13. The charging current Ic in this case is determined on the basis of a point C, which is determined by the voltage V1 and the current value 14, and the point B, which is determined by the voltage V2 and the current value 13. Thus, if the control unit 61 obtains the second control data stored in the memory 51 and the battery voltage Vbat, the charging circuit 31 generates the charging current Ic in the relationship as shown in Fig. 6. Even if the control unit 61 controls the charging circuit 31 on the basis of the second control data and the battery voltage Vbat, the processing to be executed by the CPU 52 is the same as in the above-described Fig. 4. Therefore, though detailed description is omitted, the battery voltage Vbat and the charging current Ic in this case are changed as in Fig. 7, for example.

The charging apparatus 10 according to an embodiment of the present invention was described hereinabove. The charging current Ic from the charging circuit 31 contains noise such as ripple which is increased more as the current value of the charging current Ic is increased. The battery 15 has internal resistance (not shown). Thus, the battery voltage Vbat contains noise according to the product of the current value of the charging current Ic and a resistance value of the internal resistance. In an embodiment of the present invention, when the voltage goes to the voltage V1 lower than the voltage V2, the current value of the charging current Ic is decreased. Thus, as compared with a case where the battery 15 is continuously charged with the constant current IA, an influence of the noise exerted on the battery voltage Vbat is smaller between the voltages V1 and V2. Therefore, the control unit 61 can detect more accurate battery voltage Vbat and can cause the charging circuit 31 to start the constant-voltage charging at the desired voltage V2 with accuracy.

At a voltage very close to the voltage V2, the current value of the charging current Ic needs to be reduced in order to suppress the noise, however, in a case where the battery voltage Vbat is far from the voltage V2, if the charging current Ic is reduced, a charging time might become longer. The control unit 61 controls the charging circuit 31 so that the charging current Ic between the voltages V1 and V2 is reduced in accordance with the rise in the battery voltage Vbat. Thus, as compared with a case where the battery 15 is charged with the constant current of the current value 13 when the voltage goes to the voltage V1, for example, the charging time can be reduced.

For example, at the voltage V2, the charging current Ic can be made lower than the current value 12 at a time when the charging is completed, however in this case, the charging time becomes longer. In an embodiment of the present invention, the current value is reduced to the current value 13, which is greater than the current value 12, so that unnecessary extension of the charging time can be prevented.

The control unit 61 controls the charging circuit 31 on the basis of the first control data stored in the memory 51, and causes the charging circuit 31 to generate the charging current Ic which changes in the relationship of the quadratic curve as shown in Fig. 3. For example, if the charging current Ic is changed in steps, noise and the like might be caused by that. In an embodiment of the present invention, since the charging current Ic is gently changed using the relationship of the quadratic curve, occurrence of unnecessary noise can be prevented.

As described above, the battery voltage Vbat contains the noise according to the product of the current value of the charging current Ic and the resistance value of the internal resistance. Thus, in an embodiment of the present invention, the voltage V1 is determined on the basis of the current value I1 of the constant current IA and the resistance value of the internal resistance. For example, if the current value of the constant current IA is small and the noise is also small, the voltage V1 is set higher than that in the case where the current value of the constant current IA is great and the noise is also great. If the voltage V1 is raised when the noise is great, the voltage V2 might be false detected along with the voltage V1 by the control unit 61. Therefore, the voltage V1 is set in accordance with the current value I1 and the resistance value of the internal resistance, and thus a long charging time of charging with the constant current IA can be ensured while the influence of the noise is reduced.

The memory 51 stores the program data for the CPU 52 to execute the processing shown in Fig. 4. The CPU 52 executes the program data so as to be capable of controlling the operation of the charging circuit 31.

The control unit 61 decreases the charging current Ic on the basis of the control data stored in the memory 51, but it is not limited to that. For example, the CPU 52 may calculate the quadratic curve (function) shown in Fig. 3 and sequentially change the charging current Ic on the basis of a calculation result.

Also, the battery 15 may be another secondary battery such as a nickel-cadmium battery or the like, for example.

The above embodiments of the present invention are simply for facilitating the understanding of the present invention and are not in any way to be construed as limiting the present invention.

## Claims

1. A charging apparatus comprising:
a charging circuit (31) configured to charge a secondary battery (15); and
a control circuit (32) configured to control an operation of the charging circuit,
the control circuit (32) including a control unit (61) configured to control the charging circuit so that the secondary battery (15) is charged with a constant current until a time when a battery voltage of the secondary battery (15) goes to a first voltage, control the charging circuit (31) so that the secondary battery (15) is charged with a current smaller than the constant current when the battery voltage goes to the first voltage, and control the charging circuit (31) so that the secondary battery (15) is charged with a constant voltage when the battery voltage goes to a second voltage higher than the first voltage,
wherein the control unit (32) controls the charging circuit (31) so that the secondary battery (15) is charged with such a current as to decrease in accordance with a rise in the battery voltage when the battery voltage goes to the first voltage,
wherein the control circuit (32) further includes a current detection unit (60) configured to detect a charging current of the secondary battery (15), and
wherein the control unit (32) controls the charging circuit (31) so that the charging current is lowered to a first current value when the battery voltage goes to the second voltage; and controls the charging circuit so that supply of the charging current is stopped when the current value of the charging current goes to a second current value smaller than the first current value, on the basis of a detection result of the current detection unit (60),
**characterized in that** the control circuit (32) includes a storage unit (51) configured to store information indicating a relationship of a quadratic curve calculated on the basis of the first voltage and a current value of the constant current as well as the second voltage and the first current value, the quadratic curve having a vertex at the second voltage and the first current value, and wherein the control unit (32) controls the charging circuit (31) based on the information so that the charging current is changed in magnitude in a relationship of the quadratic curve from a time when the battery voltage goes to the first voltage to a time when the battery voltage goes to the second voltage.

2. The charging apparatus according to claim 1, wherein the first voltage is such a voltage as to be determined on the basis of the current value of the constant current and a resistance value of an internal resistance of the secondary battery (15).

3. A recording medium having recorded therein a program causing a computer, which is configured to control an operation of a charging circuit configured to charge a secondary battery, to execute the steps of:
charging the secondary battery with a constant current until a time when a battery voltage of the secondary battery goes to a first voltage;
charging the secondary battery with a current smaller than the constant current when the battery voltage goes to the first voltage; and
charging the secondary battery with a constant voltage when the battery voltage goes to a second voltage higher than the first voltage,
wherein the secondary battery is charged with such a current as to decrease in accordance with a rise in the battery voltage when the battery voltage goes to the first voltage,
wherein the charging current is lowered to a first current value when the battery voltage goes to the second voltage and the supply of the charging current is stopped when the current value of the charging current goes to a second current value smaller than the first current value,
**characterized in that** information indicating a relationship of a quadratic curve calculated on the basis of the first voltage and a current value of the constant current as well as the second voltage and the first current value is stored, the quadratic curve having a vertex at the second voltage and the first current value, and
wherein charging current is changed in magnitude in a relationship of the quadratic curve according to the stored information from a time when the battery voltage goes to the first voltage to a time when the battery voltage goes to the second voltage.

4. Method for operating a computer controlling an operation of a charging circuit configured to charge a secondary battery to execute the steps of:
charging the secondary battery with a constant current until a time when a battery voltage of the secondary battery goes to a first voltage;
charging the secondary battery with a current smaller than the constant current when the battery voltage goes to the first voltage; and
charging the secondary battery with a constant voltage when the battery voltage goes to a second voltage higher than the first voltage,
wherein the secondary battery is charged with such a current as to decrease in accordance with a rise in the battery voltage when the battery voltage goes to the first voltage,
wherein the charging current is lowered to a first current value when the battery voltage goes to the second voltage and the supply of the charging current is stopped when the current value of the charging current goes to a second current value smaller than the first current value,
**characterized in that** information indicating a relationship of a quadratic curve calculated on the basis of the first voltage and a current value of the constant current as well as the second voltage and the first current value is stored, the quadratic curve having a vertex at the second voltage and the first current value, and
wherein charging current is changed in magnitude in a relationship of the quadratic curve according to the stored information from a time when the battery voltage goes to the first voltage to a time when the battery voltage goes to the second voltage.

## Patentansprüche

1. Ladevorrichtung, umfassend:
eine Ladeschaltung (31), die konfiguriert ist, um eine Sekundärbatterie (15) zu laden; und
eine Steuerschaltung (32), die konfiguriert ist, um einen Betrieb der Ladeschaltung zu steuern,
wobei die Steuerschaltung (32) eine Steuereinheit (61) einschließt, die konfiguriert ist, um die Ladeschaltung so zu steuern, dass die Sekundärbatterie (15) mit einem Konstantstrom bis zu einem Zeitpunkt geladen wird, wenn eine Batteriespannung der Sekundärbatterie (15) zu einer ersten Spannung übergeht, die Ladeschaltung (31) so zu steuern, dass die Sekundärbatterie (15) mit einem kleineren Strom als dem Konstantstrom geladen wird, wenn die Batteriespannung zu der ersten Spannung übergeht, und die Ladeschaltung (31) so zu steuern, dass die Sekundärbatterie (15) mit einer konstanten Spannung geladen wird, wenn die Batteriespannung zu einer zweiten Spannung übergeht, die höher als die erste Spannung ist,
wobei die Steuereinheit (32) die Ladeschaltung (31) so steuert, dass die Sekundärbatterie (15) mit einem Strom geladen wird, der entsprechend einem Anstieg der Batteriespannung abnimmt, wenn die Batteriespannung zu der ersten Spannung übergeht,
wobei die Steuerschaltung (32) ferner eine Stromerfassungseinheit (60) einschließt, die konfiguriert ist, um einen Ladestrom der Sekundärbatterie (15) zu erfassen, und
wobei die Steuereinheit (32) die Ladeschaltung (31) so steuert, dass der Ladestrom auf einen ersten Stromwert gesenkt wird, wenn die Batteriespannung zu der zweiten Spannung übergeht; und die Ladeschaltung so steuert, dass die Zufuhr des Ladestroms beendet wird, wenn der Stromwert des Ladestroms zu einem zweiten Stromwert übergeht, der kleiner als der erste Stromwert ist, auf der Grundlage eines Erfassungsergebnisses der Stromerfassungseinheit (60),
**dadurch gekennzeichnet, dass** die Steuerschaltung (32) eine Speichereinheit (51) einschließt, die konfiguriert ist, um Informationen zu speichern, die eine Beziehung einer quadratischen Kurve anzeigen, die auf der Grundlage der ersten Spannung und eines Stromwertes des Konstantstroms sowie der zweiten Spannung und des ersten Stromwertes berechnet wird, wobei die quadratische Kurve einen Scheitelpunkt bei der zweiten Spannung und dem ersten Stromwert aufweist, und wobei die Steuereinheit (32) die Ladeschaltung (31) basierend auf den Informationen so steuert, dass der Ladestrom in seiner Größe in einem Verhältnis der quadratischen Kurve ab einem Zeitpunkt, zu dem die Batteriespannung zu der ersten Spannung übergeht, bis zu einem Zeitpunkt, zu dem die Batteriespannung zu der zweiten Spannung übergeht, geändert wird.

2. Ladevorrichtung nach Anspruch 1, wobei die erste Spannung eine Spannung ist, die auf der Grundlage des Stromwertes des Konstantstroms und eines Widerstandswertes eines Innenwiderstandes der Sekundärbatterie (15) zu bestimmen ist.

3. Aufzeichnungsmedium, auf dem ein Programm aufgezeichnet ist, das einen Computer, der konfiguriert ist, um einen Betrieb einer Ladeschaltung zu steuern, die konfiguriert ist, um eine Sekundärbatterie aufzuladen, veranlasst, die folgenden Schritte auszuführen:
Laden der Sekundärbatterie mit einem Konstantstrom bis zu einem Zeitpunkt, zu dem eine Batteriespannung der Sekundärbatterie zu einer ersten Spannung übergeht;
Laden der Sekundärbatterie mit einem kleineren Strom als dem Konstantstrom, wenn die Batteriespannung zu der ersten Spannung übegeht; und
Laden der Sekundärbatterie mit einer konstanten Spannung, wenn die Batteriespannung zu einer zweiten Spannung übergeht, die höher als die erste Spannung ist,
wobei die Sekundärbatterie mit einem Strom geladen wird, der entsprechend einem Anstieg der Batteriespannung abnimmt, wenn die Batteriespannung zu der ersten Spannung übergeht,
wobei der Ladestrom auf einen ersten Stromwert gesenkt wird, wenn die Batteriespannung zu der zweiten Spannung übergeht, und die Zufuhr des Ladestroms beendet wird, wenn der Stromwert des Ladestroms zu einem zweiten Stromwert übergeht, der kleiner als der erste Stromwert ist,
**dadurch gekennzeichnet, dass** Informationen gespeichert sind, die ein Verhältnis einer quadratischen Kurve anzeigen, die auf der Grundlage der ersten Spannung und eines Stromwertes des Konstantstroms sowie der zweiten Spannung und des ersten Stromwertes berechnet wird, wobei die quadratische Kurve einen Scheitelpunkt bei der zweiten Spannung und dem ersten Stromwert aufweist, und
wobei der Ladestrom in seiner Größe in einem Verhältnis der quadratischen Kurve gemäß den gespeicherten Informationen ab einem Zeitpunkt, zu dem die Batteriespannung zu der ersten Spannung übergeht, bis zu einem Zeitpunkt, zu dem die Batteriespannung zu der zweiten Spannung übergeht, geändert wird.

4. Verfahren zum Betreiben eines Computers, der einen Betrieb einer Ladeschaltung steuert, die konfiguriert ist, um eine Sekundärbatterie zu laden, um die folgenden Schritte auszuführen:
Laden der Sekundärbatterie mit Konstantstrom bis zu einem Zeitpunkt, zu dem eine Batteriespannung der Sekundärbatterie zu einer ersten Spannung übergeht;
Laden der Sekundärbatterie mit einem kleineren Strom als dem Konstantstrom, wenn die Batteriespannung zu der ersten Spannung übergeht; und
Laden der Sekundärbatterie mit einer konstanten Spannung, wenn die Batteriespannung zu einer zweiten Spannung übergeht, die höher als die erste Spannung ist,
wobei die Sekundärbatterie mit einem Strom geladen wird, der entsprechend einem Anstieg der Batteriespannung abnimmt, wenn die Batteriespannung zu der ersten Spannung übergeht,
wobei der Ladestrom auf einen ersten Stromwert gesenkt wird, wenn die Batteriespannung zu der zweiten Spannung übergeht, und die Zufuhr des Ladestroms beendet wird, wenn der Stromwert des Ladestroms zu einem zweiten Stromwert übergeht, der kleiner als der erste Stromwert ist,
**dadurch gekennzeichnet, dass** Informationen gespeichert werden, die ein Verhältnis einer quadratischen Kurve anzeigen, die auf der Grundlage der ersten Spannung und eines Stromwertes des Konstantstroms sowie der zweiten Spannung und des ersten Stromwertes berechnet wird, wobei die quadratische Kurve einen Scheitelpunkt bei der zweiten Spannung und dem ersten Stromwert aufweist, und
wobei der Ladestrom in seiner Größe in einem Verhältnis der quadratischen Kurve gemäß den gespeicherten Informationen ab einem Zeitpunkt, zu dem die Batteriespannung zu der ersten Spannung übergeht, bis zu einem Zeitpunkt, zu dem die Batteriespannung zu der zweiten Spannung übergeht, geändert wird.

## Revendications

1. Appareil de charge, comprenant :
un circuit de charge (31) configuré pour charger une batterie secondaire (15) ; et
un circuit de commande (32) configuré pour commander un fonctionnement du circuit de charge,
le circuit de commande (32) incluant une unité de commande (61) configurée pour commander le circuit de charge pour que la batterie secondaire (15) soit chargée avec un courant constant jusqu'à un instant auquel une tension de batterie de la batterie secondaire (15) passe à une première tension, commander le circuit de charge (31) pour que la batterie secondaire (15) soit chargée avec un courant inférieur au courant constant lorsque la tension de batterie passe à la première tension, et commander le circuit de charge (31) pour que la batterie secondaire (15) soit chargée avec une tension constante lorsque la tension de batterie passe à une seconde tension supérieure à la première tension,
dans lequel l'unité de commande (32) commande le circuit de charge (31) pour que la batterie secondaire (15) soit chargée avec un courant tel qu'il diminue conformément à une augmentation de la tension de batterie lorsque la tension de batterie passe à la première tension,
dans lequel le circuit de commande (32) inclut en outre une unité de détection de courant (60) configurée pour détecter un courant de charge de la batterie secondaire (15), et
dans lequel l'unité de commande (32) commande le circuit de charge (31) pour que le courant de charge soit réduit à une première valeur de courant lorsque la tension de batterie passe à la seconde tension ; et commande le circuit de charge pour que l'alimentation en courant de charge soit arrêtée lorsque la valeur de courant du courant de charge passe à une seconde valeur de courant inférieure à la première valeur de courant, en fonction d'un résultat de détection de l'unité de détection de courant (60),
**caractérisé en ce que** le circuit de commande (32) inclut une unité de stockage (51) configurée pour stocker des informations indiquant une relation d'une courbe quadratique calculée en fonction de la première tension et d'une valeur de courant du courant constant ainsi que de la seconde tension et de la première valeur de courant, la courbe quadratique possédant un sommet à la seconde tension et la première valeur de courant, et dans lequel l'unité de commande (32) commande le circuit de charge (31) en fonction des informations pour que l'amplitude du courant de charge soit changée dans une relation de la courbe quadratique d'un instant auquel la tension de batterie passe à la première tension à un instant auquel la tension de batterie passe à la seconde tension.

2. Appareil de charge selon la revendication 1, dans lequel la première tension est une tension telle qu'elle est déterminée en fonction de la valeur de courant du courant constant et d'une valeur de résistance d'une résistance interne de la batterie secondaire (15).

3. Support d'enregistrement possédant, enregistré dans celui-ci, un programme faisant en sorte qu'un ordinateur, qui est configuré pour commander un fonctionnement d'un circuit de charge configuré pour charger une batterie secondaire, exécute les étapes de :
la charge de la batterie secondaire avec un courant constant jusqu'à un instant auquel une tension de batterie de la batterie secondaire passe à une première tension ;
la charge de la batterie secondaire avec un courant inférieur au courant constant lorsque la tension de batterie passe à la première tension ; et
la charge de la batterie secondaire avec une tension constante lorsque la tension de batterie passe à une seconde tension supérieure à la première tension,
dans lequel la batterie secondaire est chargée avec un courant tel qu'il diminue conformément à une augmentation de la tension de batterie lorsque la tension de batterie passe à la première tension,
dans lequel le courant de charge est réduit à une première valeur de courant lorsque la tension de batterie passe à la seconde tension et l'alimentation en courant de charge est arrêtée lorsque la valeur de courant du courant de charge passe à une seconde valeur de courant inférieure à la première valeur de courant,
**caractérisé en ce que** des informations indiquant une relation d'une courbe quadratique calculée en fonction de la première tension et d'une valeur de courant du courant constant ainsi que de la seconde tension et de la première valeur de courant sont stockées, la courbe quadratique possédant un sommet à la seconde tension et la première valeur de courant, et
dans lequel l'amplitude du courant de charge est changée dans une relation de la courbe quadratique selon les informations stockées d'un instant auquel la tension de batterie passe à la première tension à un instant auquel la tension de batterie passe à la seconde tension.

4. Procédé pour faire fonctionner un ordinateur commandant un fonctionnement d'un circuit de charge configuré pour charger une batterie secondaire pour exécuter les étapes de :
la charge de la batterie secondaire avec un courant constant jusqu'à un instant auquel une tension de batterie de la batterie secondaire passe à une première tension ;
la charge la batterie secondaire avec un courant inférieur au courant constant lorsque la tension de batterie passe à la première tension ; et
la charge de la batterie secondaire avec une tension constante lorsque la tension de batterie passe à une seconde tension supérieure à la première tension,
dans lequel la batterie secondaire est chargée avec un courant tel qu'il diminue conformément à une augmentation de la tension de batterie lorsque la tension de batterie passe à la première tension,
dans lequel le courant de charge est réduit à une première valeur de courant lorsque la tension de batterie passe à la seconde tension et l'alimentation en courant de charge est arrêtée lorsque la valeur de courant du courant de charge passe à une seconde valeur de courant inférieure à la première valeur de courant,
**caractérisé en ce que** des informations indiquant une relation d'une courbe quadratique calculée en fonction de la première tension et d'une valeur de courant du courant constant ainsi que de la seconde tension et de la première valeur de courant sont stockées, la courbe quadratique possédant un sommet à la seconde tension et la première valeur de courant, et
dans lequel l'amplitude du courant de charge est changée dans une relation de la courbe quadratique selon les informations stockées d'un instant auquel la tension de batterie passe à la première tension à un instant auquel la tension de batterie passe à la seconde tension.
